# EUROPÄISCHE PATENTSCHRIFT

(11) **EP 3 408 549 B1**
(45) Veröffentlichungstag und Bekanntmachung des Hinweises auf die Patenterteilung: **13.04.2022**
(21) Anmeldenummer: 17701480.0
(22) Anmeldetag: 25.01.2017
(51) Int. Cl.: F16C 33/66

(54) **WÄLZLAGER, WINDKRAFTANLAGE UND VERFAHREN ZUM BETRIEB EINES WÄLZLAGERS**
ROLLING BEARING, WIND TURBINE, AND METHOD FOR OPERATING A ROLLING BEARING
PALIER À ROULEMENT, ÉOLIENNE ET PROCÉDÉ DE FONCTIONNEMENT D'UN PALIER À ROULEMENT

(30) Priorität: 26.01.2016 DE 102016101276; 23.09.2016 DE 102016118054
(43) Veröffentlichungstag der Anmeldung: 05.12.2018
(73) Patentinhaber: thyssenkrupp rothe erde Germany GmbH, 44137 Dortmund (DE); thyssenkrupp AG, 45143 Essen (DE)
(72) Erfinder: ELFERT, Gunther, 59597 Erwitte (DE); LÖFFLER, Stefan, 59199 Bönen (DE); LÜNEBURG, Bernd, 45481 Mülheim an der Ruhr (DE); ROLLMANN, Jörg, 59558 Lippstadt (DE)
(74) Vertreter: thyssenkrupp Intellectual Property GmbH
(86) Internationale Anmeldenummer: PCT/EP2017/051465
(87) Internationale Veröffentlichungsnummer: WO 2017/129578

(56) Entgegenhaltungen:
- EP-A1- 2 620 642
- EP-A1- 2 762 737
- WO-A1-2011/064002
- WO-A1-2014/037193
- WO-A2-2010/040027
- DE-A1- 4 329 398
- DE-A1-102012 215 217
- DE-A1-102013 216 140
- DE-C- 901 359
- DE-U1-202008 001 286
- GB-A- 697 797
- US-A- 2 848 284
- US-A1- 2015 240 872
- US-B1- 6 324 899

## Beschreibung

### Stand der Technik

Die vorliegende Erfindung betrifft ein Wälzlager mit einem Innenring, einem relativ zum Innenring um eine Drehachse drehbaren Außenring und mindestens einem zwischen dem Innenring und dem Außenring angeordneten Dichtelement zur Abdichtung eines mit einem Schmierstoff füllbaren Innenraums des Wälzlagers. Ein weiterer Gegenstand der Erfindung ist ein Wälzlager mit einem Außenring, einem relativ zum Außenring um eine Drehachse drehbaren Innenring und mindestens einem zwischen dem Innenring und dem Außenring angeordneten Dichtelement zur Abdichtung eines mit einem Schmierstoff füllbaren Innenraums des Wälzlagers. Ferner betrifft die Erfindung ein Verfahren zum Betrieb eines Wälzlagers mit einem Innenring, einem relativ zum Innenring um eine Drehachse drehbaren Außenring und mindestens einem zwischen dem Innenring und dem Außenring angeordneten Dichtelement zur Abdichtung eines mit einem Schmierstoff gefüllten Innenraums des Wälzlagers. Zudem betrifft die Erfindung ein Wälzlager mit einem Außenring und einem relativ zum Außenring um eine Drehachse drehbaren Innenring, sowie mit mindestens einem zwischen dem Innenring und dem Außenring angeordneten Dichtelement zur Abdichtung eines mit einem Schmierstoff gefüllten Innenraums des Wälzlagers.

Ein weiterer Gegenstand der Erfindung ist eine Windkraftanlage mit einer Gondel, einem Rotor und einem Wälzlager, über welches der Rotor drehbar mit der Gondel verbunden ist, wobei das Wälzlager entweder einen drehfest mit der Gondel verbundenen Innenring und einen relativ zum Innenring um eine Drehachse drehbaren, drehfest mit dem Rotor verbundenen Außenring oder einen drehfest mit der Gondel verbundenen Außenring und einen relativ zum Außenring um eine Drehachse drehbaren, drehfest mit dem Rotor verbundenen Innenring aufweist, sowie mit mindestens einem zwischen dem Innenring und dem Außenring angeordneten Dichtelement zur Abdichtung eines mit einem Schmierstoff füllbaren Innenraums des Wälzlagers.

Wälzlager weisen in der Regel einen Innenring sowie einen relativ zum Innenring um eine Drehachse drehbaren Außenring auf. Derartige Wälzlager sind typischerweise mit einem Schmierstoff, wie z. B. einem Fett oder einem Öl, gefüllt, durch welchen einer übermäßigen Abnutzung von Kontaktstellen innerhalb des Wälzlagers entgegengewirkt werden kann. Um den mit Schierstoff gefüllten Innenraum des Wälzlagers abzudichten und somit ein unerwünschtes Entweichen von Schmierstoff möglichst zu verhindern, ist zwischen dem Innenring und dem Außenring üblicherweise ein Dichtelement vorgesehen.

Solche Dichtelemente haben sich in der Praxis durchaus bewährt. Allerdings kommt es insbesondere in solchen Fällen, in denen ein lokaler Überschuss an Schmierstoff oder ein lokal erhöhter Druck in dem Wälzlager vorliegt, oftmals zu Leckagen von Schmierstoff durch die vorhandenen Dichtelemente. Solche Schmierstoffleckagen reduzieren den Schmierstoffvorrat in dem Wälzlager, so dass es erforderlich ist, das Wälzlager in regelmäßigen Abständen zu warten, um die vorhandene Schmierstoffmenge in dem Wälzlager zu prüfen und ggf. Schmierstoff zu ersetzen.

Aus der WO 2010/040027 A2 ist ein Wälzlager bekannt, bei dem die Versorgung des Lagers mit Schmierstoff in einer Art Durchlaufverfahren sichergestellt wird. Der Schmierstoff wird über einen in Axialrichtung im Bereich der Lagermitte liegenden Zuführkanal in das Wälzlager eingeführt und den Wälzkörpern zugeführt. Der Schmierstoff wird während des Betriebes des Wälzlagers in Richtung einer in Axialrichtung außen zwischen dem Lagerinnenring und dem Lageraußenring angeordneten Dichtung bewegt. Vor der Dichtung ist ein Abführkanal in dem Lagerinnenring vorgesehen, über den der Schmierstoff aus dem Lagerinneren mittels einer Pumpe abgezogen wird. Der Schmierstoff wird im Betrieb des Lagers durch dessen Rotation mit Hilfe eines Befüllungselements in den Abführkanal eingepresst und dann mittels der Pumpe aus dem Abführkanal abgezogen.

### Offenbarung der Erfindung

Die Aufgabe der vorliegenden Erfindung ist es, die Wartungsintervalle von Wälzlagern zu verlängern.

Bei einem Wälzlager der eingangs genannten Art wird die Aufgabe gelöst durch ein Wälzlager mit den Merkmalen nach Anspruch 1.

Durch das Förderelement kann der in dem Wälzlager vorhandene Schmierstoff, insbesondere Fett oder Öl, umgewälzt werden, so dass es möglich, wird, lokale Schmiermittelüberschüsse und/oder lokale Druckerhöhungen im Innenraum, insbesondere im Bereich der Innenseite des Dichtelements, abzubauen. Das Förderelement ist an dem einen von Innenring und Außenring angeordnet, wobei zwischen dem Förderelement und dem anderen von Innenring und Außenring ein Spiel vorgesehen ist. Durch das Spiel zwischen dem Förderelement und dem gegenüber dem Förderelement bewegbaren Innenring bzw. Außenring wird ein Bereich definiert, in welchem vorhandener Schmierstoff nicht von dem Förderelement aufgenommen und/oder gefördert werden kann. Es kann somit eine vorgegebene Menge an Schmierstoff im Bereich vor dem Dichtelement verbleiben, so dass die Funktionsfähigkeit des Dichtelements nicht beeinträchtigt wird. Zudem wird durch das Spiel möglichem Verschleiß des Förderelements durch Kontakt mit dem gegenüber dem Förderelement bewegbaren Innenring bzw. Außenring entgegengewirkt. Ferner können durch das Spiel Deformationen des Innenrings und/oder des Außenrings aufgenommen werden. Das Förderelement ermöglicht somit, die Verteilung des Schmiermittels im Innenraum des Wälzlagers auszugleichen. Hierdurch verringert sich die Gefahr von Schmierstoffleckagen durch das Dichtelement, so dass das unerwünschte Entweichen von Schmierstoff aus dem Wälzlager reduziert und die Wartungsintervalle des Wälzlagers verlängert werden können.

Die erfindungsgemäße Lösung kann vorteilhaft insbesondere bei Großwälzlagern eingesetzt werden, die einen Außendurchmesser von z. B. mehreren Metern aufweisen und die dementsprechend auch große Mengen an Schmierstoff enthalten. Bei derartigen Großwälzlagern sind die Laufbahnen der Wälzkörper bevorzugt durch Induktionshärten gehärtet.

Erfindungsgemäß weist das Wälzlager mindestens ein Abstreifelement zum Abstreifen von Schmierstoff von dem Förderelement auf. Das Abstreifelement kann derart angeordnet sein, dass von dem Förderelement geförderter Schmierstoff durch das Abstreifelement von dem Förderelement abgestriffen wird. Der abgestriffene Schmierstoff kann über das Abstreifelement aus dem Bereich des Dichtelements abgeleitet werden.

In diesem Zusammenhang ist es vorteilhaft, wenn das Förderelement gegenüber dem Abstreifelement bewegbar ist, so dass bei einer Bewegung des Förderelements gegenüber dem Abstreifelement, insbesondere an dem Abstreifelement vorbei, von dem Förderelement geförderter Schmierstoff durch das Abstreifelement abgestriffen werden kann.

Eine bevorzugte Ausgestaltung sieht vor, dass das Förderelement lamellenförmig ausgebildet ist, wodurch eine gute Förderwirkung erreicht werden kann. Alternativ oder zusätzlich kann das Abstreifelement lamellenförmig ausgebildet sein. Gemäß einer abweichenden Ausgestaltung ist das Förderelement und/oder das Abstreifelement schaufelförmig oder dreieckig ausgestaltet.

Bevorzugt ist es ferner, wenn eine Haupterstreckungsebene des Förderelements einen spitzen Winkel mit einer die Drehachse einschließenden Axialebene des Wälzlagers einschließt. Durch eine derartige Neigung des Förderelements gegenüber der Drehachse kann dem durch das Förderelement geförderten Schmierstoff eine zusätzliche Kraftkomponenten in axialer Richtung aufgegeben werden, so dass der Schmierstoff nicht nur in Umfangsrichtung sondern auch in axialer Richtung gefördert wird. Besonders bevorzugt ist der spitze Winkel zwischen Förderelement und Axialebene derart angeordnet, dass Schmierstoff bei Bewegung des Förderelements in Richtung auf eine Laufbahn des Wälzlagers zu gefördert wird. Hierdurch wird es möglich, Schmierstoff von einem in einem Randbereich des Wälzlagers angeordneten Dichtelement weg zu fördern, so dass die Verteilung des Schmierstoffs auch in axialer Richtung ausgeglichen werden kann. Alternativ oder zusätzlich kann eine Haupterstreckungsebene des Abstreifelements einen spitzen Winkel mit einer die Drehachse einschließenden Axialebene des Wälzlagers einschließen, so dass der Schmierstoff in axialer Richtung mittels des Abstreifelements abgeleitet werden kann.

Vorteilhaft ist eine Ausgestaltung, bei welcher das Förderelement und das Abstreifelement bezüglich einer die Drehachse einschließenden Axialebene des Wälzlagers eine gegenläufige Neigung aufweisen. Durch die gegenläufige Neigung kann von dem Förderelement abgestriffener Schmierstoff verbessert über das Abstreifelement in radialer Richtung abgeleitet werden.

Als vorteilhaft hat es sich ferner eine Ausgestaltung herausgestellt, bei welcher eine Haupterstreckungsebene des Förderelements parallel zu einer Radialrichtung des Wälzlagers angeordnet ist, so dass der Schmierstoff mittels des Förderelements verbessert in Umfangsrichtung gefördert werden kann. Alternativ oder zusätzlich kann eine Haupterstreckungsebene des Abstreifelements parallel zu einer Radialrichtung des Wälzlagers angeordnet sein.

Bevorzugt ist das Abstreifelement an dem anderen von Innenring und Außenring angeordnet und zwischen dem Abstreifelement und dem einen von Innenring und Außenring ist ein Spiel vorgesehen. Durch das Vorsehen eines Spiels zwischen dem Abstreifelement und dem gegenüber dem Abstreifelement bewegbaren Innenring bzw. Außenring kann der Verschleiß des Abstreifelements reduziert werden.

Eine vorteilhafte Ausgestaltung des Wälzlagers sieht vor, dass das Wälzlager mehrere Förderelemente aufweist, so dass die Förderwirkung verstärkt werden kann. Alternativ oder zusätzlich kann das Wälzlager mehrere Abstreifelemente aufweisen.

Bevorzugt weist das Wälzlager mehrere Förderelemente auf, die an einem gemeinsamen, insbesondere ringförmigen, ersten Grundkörper angeordnet sind. Der erste Grundkörper kann zusammen mit den Förderelementen ein drehbares Förderrad bilden. Der erste Grundkörper und/oder die Förderelemente können aus einem Metall gebildet sein.

Bevorzugt ist es ferner, wenn das Wälzlager mehrere Abstreifelemente aufweist, die an einem gemeinsamen, insbesondere ringförmigen, zweiten Grundkörper angeordnet sind. Der zweite Grundkörper kann zusammen mit den Abstreifelementen ein Abstreifrad bilden, wobei das Förderrad gegenüber dem Abstreifrad bewegbar, insbesondere um die Drehachse drehbar, ist. Der zweite Grundkörper und/oder die Abstreifelemente können aus einem Metall gebildet sein.

Als vorteilhaft hat es sich eine Ausgestaltung erwiesen, wobei der zweite Grundkörper Ausnehmungen aufweist, durch welche Schmierstoff von den Abstreifelementen durch den Grundkörper leitbar ist, insbesondere in Richtung von Wälzkörpern des Wälzlagers. Die Ausnehmungen können durch Stanzen und nachfolgendes Biegen des gestanzten Bereichs gebildet sein, wobei der gestanzte Bereich derart gebogen ist, dass er das Abstreifelement bildet. Hierdurch kann eine fertigungstechnisch vorteilhafte und kostengünstige Realisierung der Abstreifelemente verwirklicht werden. Alternativ oder zusätzlich kann der erste Grundkörper Ausnehmungen aufweisen, welche durch Stanzen und nachfolgendes Biegen des gestanzten Bereichs gebildet sind, wobei der gestanzte Bereich derart gebogen ist, dass er das Förderelement bildet.

Bevorzugt weist das Wälzlager zwei zwischen dem Innenring und dem Außenring angeordnete Dichtelemente zur Abdichtung des Innenraums auf. Die Dichtelemente können auf sich gegenüberliegenden Seiten des Wälzlagers angeordnet sein, so dass der Innenraum des Wälzlagers von beiden Seiten abgedichtet wird. Beide Dichtelemente können als Dichtringe ausgestaltet sein.

Bei einem Verfahren der eingangs genannten Art wird die Aufgabe gelöst durch ein Verfahren mit den Merkmalen nach Anspruch 14.

Es können dieselben Vorteile erreicht werden, wie sie bereits im Zusammenhang mit dem Wälzlager beschrieben worden sind.

Eine bevorzugte Ausgestaltung des Verfahrens sieht vor, dass der Schmierstoff durch das Förderelement während des Drehens des Innenrings gegenüber dem Außenring gefördert wird.

Bei einer Windkraftanlage der eingangs genannten Art wird die Aufgabe gelöst durch eine Windkraftanlage mit den Merkmalen nach Anspruch 13.

Es können dieselben Vorteile erreicht werden, wie sie bereits im Zusammenhang mit dem Wälzlager beschrieben worden sind.

Alternativ oder zusätzlich können auch die im Zusammenhang mit dem Wälzlager beschriebenen vorteilhaften Merkmale bei der Windkraftanlage und dem Verfahren Anwendung finden.

Weitere Einzelheiten, Merkmale und Vorteile der Erfindung ergeben sich aus den Zeichnungen, sowie aus der nachfolgenden Beschreibung einer bevorzugten Ausführungsform anhand der Zeichnungen. Die Zeichnungen illustrieren dabei lediglich eine beispielhafte Ausführungsform der Erfindung, welche den Erfindungsgedanken nicht einschränkt.

### Kurze Beschreibung der Figuren

Die **Figur 1** zeigt ein Ausführungsbeispiel eines erfindungsgemäßen Wälzlagers in einer perspektivischen Schnittdarstellung.
Die **Figur 2** zeigt das Wälzlager aus Figur 1 in einer perspektivischen Schnittdarstellung aus einem zweiten Blickwinkel.
Die **Figur 3** zeigt das Wälzlager aus Figur 1 in einer perspektivischen Darstellung aus einem dritten Blickwinkel.
Die **Figur 4** zeigt das Wälzlager aus Figur 1 in einer perspektivischen Darstellung aus einem vierten Blickwinkel.
Die **Figur 5** zeigt ein Ausführungsbeispiel einer erfindungsgemäßen Windkraftanlage.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

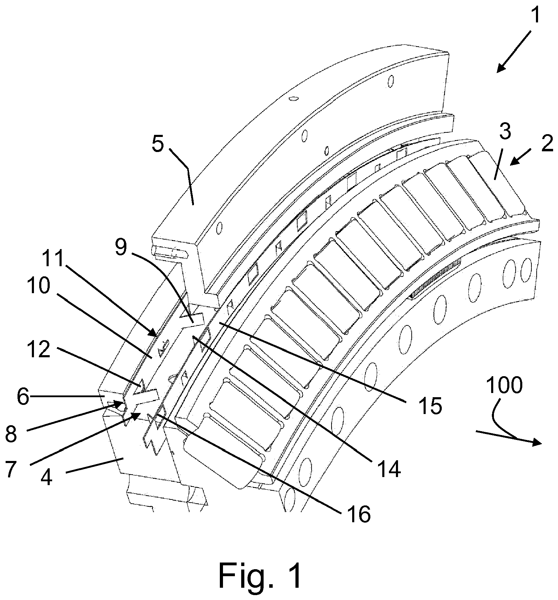

Die Abbildung in **Figur 1** zeigt ein Wälzlager 1 gemäß einem Ausführungsbeispiel der Erfindung. Das Wälzlager 1 ist als Großwälzlager ausgebildet und weist einen Durchmesser im Bereich von 1 m bis 10 m, bevorzugt von 3 m bis 7 m, besonders bevorzugt von 4 m bis 6 m auf. Das Wälzlager 1 umfasst zwei Laufbahnen 2, in denen kegelförmige Wälzkörper 3 aufgenommen sind, wobei in den Darstellungen jeweils nur eine Laufbahn 2 gezeigt ist. Insofern handelt es sich bei dem Wälzlager 1 um ein zweireihiges Kegelrollenlager. Die Laufbahnen 2 sind zwischen einem Innenring 4 und einem Außenring 5 angeordnet, wobei in den Figuren zur Verbesserung der Übersichtlichkeit die an den Wälzkörpern 3 anliegenden Teile des Außenrings 5 nicht dargestellt sind. Der Außenring 5 ist gegenüber dem Innenring 4 um eine Drehachse drehbar angeordnet, welche parallel zu der in **Figur 1** mit dem Bezugszeichen 100 gezeigten axialen Richtung angeordnet ist. Der Innenraum 7 des Wälzlagers 1 ist mit einem als Fett ausgebildeten Schmierstoff gefüllt. Um ein unerwünschtes Austreten des Schmierstoffs aus dem Wälzlager 1 möglichst zu verhindern, weist das Wälzlager 1 ein erstes Dichtelement 6 auf. Das erste Dichtelement 6 ist auf einer Außenseite des Wälzlagers 1 angeordnet. Ferner weist das Wälzlager ein nicht dargestelltes, zweites Dichtelement auf, welches auf einer der Außenseite gegenüberliegenden Innenseite des Wälzlagers 1 angeordnet ist.

Derartige Wälzlager 1 können beispielsweise als Rotorlager in Windkraftanlagen Verwendung finden. Bei einer solchen Anwendung als Rotorlager weist das Wälzlager 1 eine bevorzugte Drehrichtung auf und ist im Wesentlichen kontinuierlich drehend. Um die Stillstandszeiten der Windkraftanlagen zu verringern, ist es erwünscht, dass solche kontinuierlich drehenden Wälzlager 1 möglichst lange Wartungsintervalle haben. Um die Wartungsintervalle zu verlängern, sind bei dem Wälzlager 1 besondere Maßnahmen ergriffen worden. Das Wälzlager 1 weist eine in dem Innenraum 7 angeordnete Fördereinrichtung 8 zur Förderung des Schmierstoffs auf. Die Fördereinrichtung 8 ist rein mechanisch ausgestaltet und sorgt dafür, dass der Schmierstoff infolge einer Drehung des Außenrings 5 gegenüber dem Innenring 4 innerhalb des Wälzlagers 1 umgewälzt wird, so dass bestehende Ungleichverteilungen des Schmierstoffs im Bereich vor dem ersten Dichtelement 6 abgebaut werden können. Hierdurch verringert sich die Gefahr von Schmierstoffleckagen durch das erste Dichtelement 6, so dass das unerwünschte Entweichen von Schmierstoff aus dem Wälzlager reduziert und die Wartungsintervalle des Wälzlagers verlängert werden können.

Die vorstehend beschriebenen Wälzlager 1 weisen häufig einen Außendurchmesser von über 1 m, häufig über 2 m auf. Diese Wälzlager weisen daher auch eine große Menge an Schmierstoff auf. Die Erfindung kann daher gerade bei diesen Großwälzlagern das unerwünschte Austreten von Schmierstoff effektiv verhindern und vorteilhaft eingesetzt werden. Bei diesen Großwälzlagern sind die Laufbahnen für die Wälzkörper mittels Induktionshärten gehärtet. Dieses Härtungsverfahren wird insbesondere bei Großwälzlagern mit einem Außendurchmesser von mehr als 2 m eingesetzt, weil das Durchhärten der Ringe bei solch großen Lagern mit technischen und wirtschaftlichen Nachteilen verbunden ist.

Bei dem Wälzlager 1 gemäß dem Ausführungsbeispiel weist die Fördereinrichtung 8 eine Vielzahl an Förderelementen 9 auf, die um die Drehachse des Wälzlagers 1 drehbar angeordnet sind. Hierzu sind die Förderelemente 9 drehfest an dem Außenring 5 festgelegt, so dass die Förderelemente 9 bei einer Drehung des Außenrings 5 gegenüber dem Innenring 4 mit dem Außenring 5 mitdrehen. Die Förderelemente 9 sind einstückig mit einem ersten Grundkörper 10 verbunden, welcher ringförmig ausgestaltet ist. Der erste Grundkörper 10 und die Förderelemente 9 bilden insofern zusammen ein mit dem Außenring 5 mitdrehendes Förderrad 11. Die Förderelemente 9 sind aus dem ersten Grundkörper 10 ausgestanzt und nach innen gebogen, so dass neben dem Förderelement 9 eine Ausnehmung 12 gebildet ist, welche den Durchfluss von Schmierstoff durch den ersten Grundkörper 10 erlaubt. So gesehen stellt das Förderrad 11 ein umlaufendes Förderblech dar.

Die Förderelemente 9 sind im Wesentlichen lamellenförmig ausgestaltet. Insofern sind die Förderelemente 9 als Förderlamellen ausgestaltet. Die Förderelemente 9 sind aus einem starren Material, insbesondere aus einem Metall, gebildet. Sie weisen eine Haupterstreckungsebene auf, welche in einer Neigung zu der Innenkontur des ersten Grundkörpers 10 angeordnet ist. Die Haupterstreckungsebene der Förderelemente 9 ist parallel zu einer Radialrichtung 101 des Wälzlagers 1. Ferner schließt die Haupterstreckungsebene der Förderelemente 9 einen spitzen Winkel mit einer die Drehachse einschließenden Axialebene des Wälzlagers 1 ein. Bei dem Wälzlager 1 gemäß dem Ausführungsbeispiel kann durch den Winkel der Förderelemente 9 gegenüber der Axialebene erreicht werden, dass Schmierstoff bei einer Drehung der Förderelemente 9 entgegen dem Uhrzeigersinn in Richtung von dem ersten Dichtelement 6 weg gefördert wird.

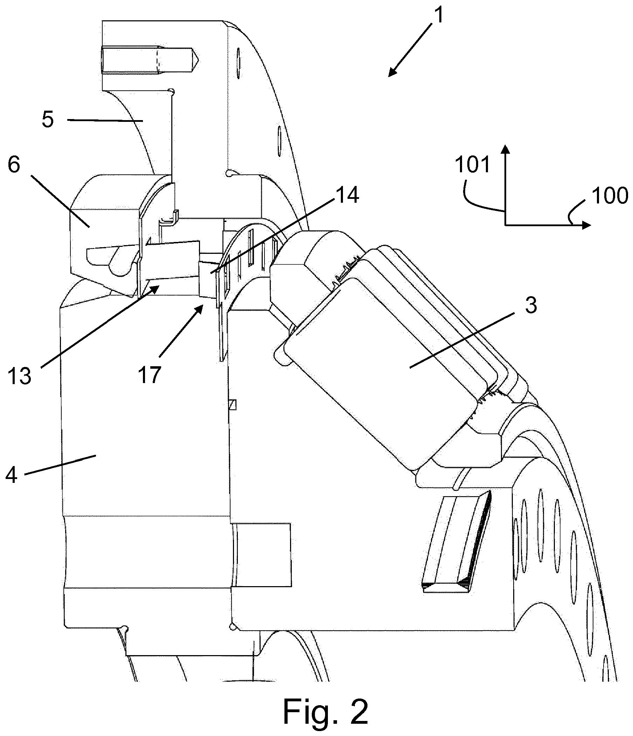

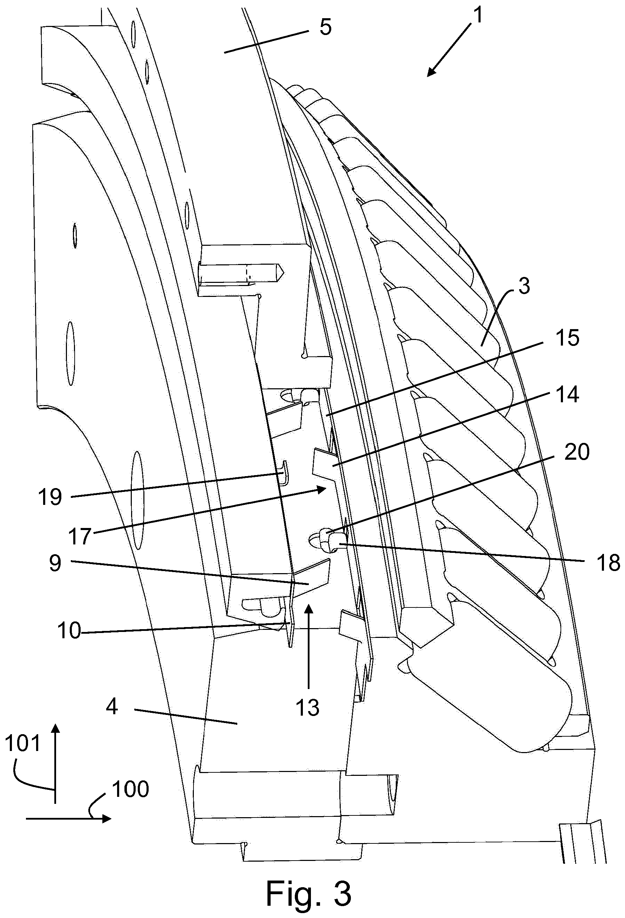

Wie der Darstellung in den **Figuren 2** **und** **3** zu entnehmen ist, weist die Fördereinrichtung 8 zusätzlich eine Vielzahl an Abstreifelementen 14 auf, über welche Schmierstoff, der von den Förderelementen 9 gefördert wird, abgestriffen werden kann. Die Abstreifelemente 14 sind derart angeordnet, dass sich die Förderelemente 9 gegenüber dem Abstreifelementen 14 bewegen können. Hierzu sind die Abstreifelemente 14 drehfest an dem Innenring 4 festgelegt. Die Abstreifelemente 14 sind einstückig mit einem zweiten Grundkörper 15 verbunden, welcher ringförmig ausgebildet ist. Der zweite Grundkörper 15 bildet zusammen mit den Abstreifelementen 14 ein Abstreifrad 15. Die Abstreifelemente 14 sind durch Stanzen und Biegen von Abschnitten des zweiten Grundkörpers 15 gebildet, so dass neben jedem Abstreifelement 14 jeweils eine Ausnehmung 16 in dem zweiten Grundkörper 15 angeordnet ist.

Die Abstreifelemente 14 sind im Wesentlichen lamellenförmig ausgestaltet. Die Abstreifelemente 14 sind aus einem starren Material, insbesondere aus einem Metall, gebildet. Sie weisen eine Haupterstreckungsebene auf, welche in einer Neigung zu der Innenkontur des zweiten Grundkörpers 15 angeordnet ist, wobei die Abstreifelemente 14 quer zu den Förderelementen 9 angeordnet sind. Insofern weisen die Förderelemente 9 und die Abstreifelemente 14 bezüglich einer die Drehachse einschließenden Axialebene des Wälzlagers 1 eine gegenläufige Neigung auf. Die Haupterstreckungsebene der Abstreifelemente 14 ist parallel zu einer Radialrichtung 101 des Wälzlagers 1 angeordnet. Ferner schließt die Haupterstreckungsebene der Abstreifelemente 14 einen spitzen Winkel mit einer die Drehachse einschließenden Axialebene des Wälzlagers 1 ein. Bei dem Wälzlager 1 gemäß dem Ausführungsbeispiel kann durch den Winkel der Abstreifelemente 14 gegenüber der Axialebene erreicht werden, dass Schmierstoff bei einer Drehung der Förderelemente 9 von den Förderelementen 9 abgestriffen und durch die Ausnehmungen 16 in Richtung der Wälzkörper 3 geleitet wird.

Wie in den **Figuren 2** und 3 ferner zu erkennen ist, sind die Förderelemente 9 derart angeordnet, dass zwischen den Förderelementen 9 und dem Innenring 4 ein Spalt 13 verbleibt. Der Spalt 13 stellt ein Spiel zwischen den Förderelementen 9 und dem Innenring 4 bereit, wodurch sichergestellt werden kann, dass der im Bereich vor dem ersten Dichtelement 6 angeordnete Schmierstoff nicht vollständig von dem Förderelement 9 aufgenommen und weggefördert wird, sondern dass eine gewisse Menge an Schmierstoff im Bereich vor dem ersten Dichtelement 6 verbleibt. Auch zwischen den Abstreifelementen 14 und dem Außenring 5 ist ein Spalt 17 vorgesehen, so dass ein Spiel zwischen den Abstreifelementen 14 und dem Außenring 5 besteht. Insofern besteht kein Kontakt zwischen den Förderelementen 9 und dem Innenring 4. Auch zwischen den Abstreifelementen 14 und dem Außenring 5 ist kein Kontakt gegeben.

Das erste Dichtelement 6 ist als Dichtring ausgebildet. Auch das zweite Dichtelement ist als Dichtring ausgebildet. Wie der **Figur 2** entnommen werden kann, schließt das erste Dichtelement 6 den Innenraum 7 gegenüber der Umgebung ab. Das erste Dichtelement 6 ist drehfest mit dem Außenring 5 verbunden und liegt dichtend an dem Innenring 4 an.

Die **Figur 3** zeigt eine Darstellung des Wälzlagers 1 gemäß dem Ausführungsbeispiel aus einem Blickwinkel, aus welchem ein an dem zweiten Grundkörper 15 angeordnetes Verdrehsicherungselement 18 und ein an dem ersten Grundkörper 15 angeordnetes Axialsicherungselement 19 sichtbar sind.

Über das Verdrehsicherungselement 18 kann der zweite Grundkörper 15 und/oder die Abstreifelemente 14 gegen ein unerwünschtes Verdrehen in Umfangsrichtung des Wälzlagers 1 gesichert werden. Das Verdrehsicherungselement 18 ist als im Wesentlichen plattenförmiges Element ausgebildet, welches durch Stanzen und Biegen aus dem zweiten Grundkörper 15 gebildet ist. Eine Haupterstreckungsebene des Verdrehsicherungselements 18 ist senkrecht zu einer Radialrichtung 101 des Wälzlagers 1 angeordnet. Das Verdrehsicherungselement 18 greift in eine an dem Innenring 4 gebildete Nut 20 ein, so dass eine drehfeste Kopplung von zweitem Grundkörper 15 und Innenring 4 erreicht wird. Bevorzugt sind an dem zweiten Grundkörper 15 mehrere Verdrehsicherungselemente 18 angeordnet.

Das Axialsicherungselement 19 ist hakenartig ausgebildet und hintergreift einen Bereich des Außenrings 5, so dass der erste Grundkörper 10 und/oder die Förderelemente 9 in axialer Richtung, d.h. in Richtung 100 der Drehachse, formschlüssig festgelegt sind. Bevorzugt sind an dem ersten Grundkörper 10 mehrere Axialsicherungselemente 19 angeordnet.

Der erste Grundkörper 10 kann ebenfalls ein oder mehrere Verdrehsicherungselemente 18 aufweisen. Alternativ oder zusätzlich können an dem zweiten Grundkörper 15 ein oder mehrere Axialsicherungselemente 19 vorgesehen sein.

Gemäß einer Abwandlung des in den Figuren gezeigten Ausführungsbeispiels können die Förderelemente drehfest mit dem Innenring des Wälzlagers verbunden sein. Bei einer derartigen Abwandlung sind die Abstreifelemente bevorzugt an dem Außenring des Wälzlagers vorgesehen. In diesem Fall besteht kein Kontakt zwischen den Förderelementen und dem Außenring. Ferner ist bei dieser Abwandlung zwischen den Abstreifelementen und dem Innenring kein Kontakt gegeben.

Die Förderelemente 9 und die Abstreifelemente 14 können auch eine von der des Ausführungsbeispiels abweichende Form aufweisen. Beispielsweise ist es möglich, die Förderelemente 9 und/oder die Abstreifelemente 14 gebogen, dreidimensional schaufelförmig oder dreieckig auszubilden.

Gemäß einer weiteren Abwandlung des Ausführungsbeispiels können die Förderelemente 9 als voneinander separate Förderelemente 9 ausgebildet sein. Beispielsweise ist es möglich, jedes Förderelement einzeln mit dem Außenring 5 zu verbinden oder es können Segmente umfassend mehrere einstückig miteinander verbundene Förderelemente 9 in dem Wälzlager vorgesehen sein. Ebenso können die Abstreifelemente als voneinander separate Abstreifelemente 14 ausgestaltet sein. Die Abstreifelemente 14 können einzeln mit dem Innenring 4 verbunden sein oder es ist möglich, Segmente mit mehreren, einstückig miteinander verbundenen Abstreifelementen 14 vorzusehen.

Ferner kann das zuvor beschriebene Ausführungsbeispiel auch dann Anwendung finden, wenn in dem Wälzlager ein Öl als Schmierstoff enthalten ist.

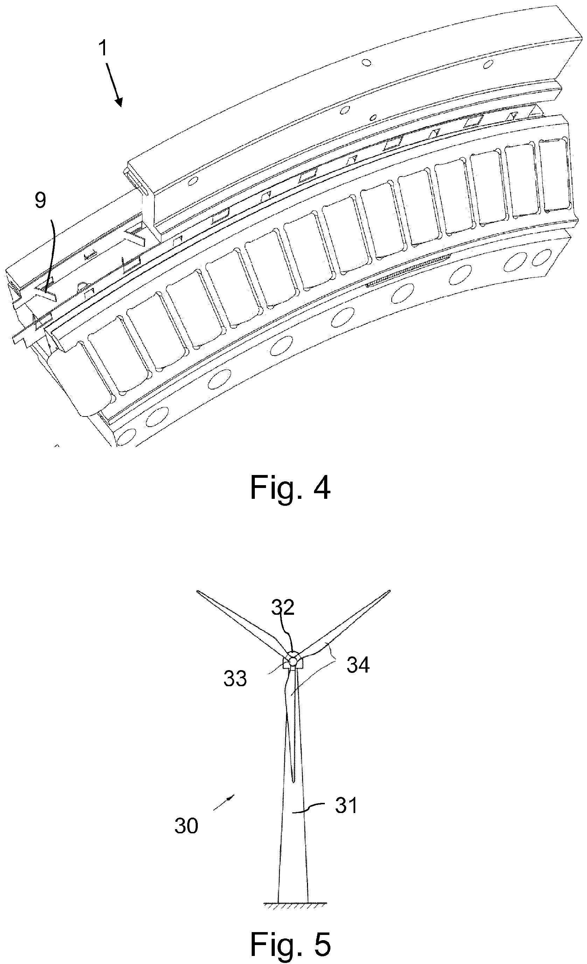

Die **Figur 5** zeigt ein Ausführungsbeispiel einer Windkraftanlage 30 gemäß der Erfindung. Die Windkraftanlage 30 weist einen Turm 31 und eine Gondel 32 auf, die über ein Azimut-Drehlager in Azimut drehbar an dem Turm 31 gelagert ist. An der Gondel 32 ist ein Rotor-lager vorgesehen, über welches ein Rotor 33 der Windkraftanlage 30 drehbar mit der Gondel 32 verbunden ist. Der Rotor 33 weist mehrere, insbesondere drei, Rotorblätter 34 auf.

Das Rotorlager dieser Windkraftanlage 30 ist ein Wälzlager 1, wie es in den Figuren 1 bis 4 dargestellt ist. Während der Innenring 4 des Wälzlagers 1 drehfest mit der Gondel 32 verbunden ist, ist der Außenring 5 des Wälzlagers 1 drehfest mit dem Rotor 33 verbunden. Insofern ist der Außenring 5 des Wälzlagers relativ zum Innenring 4 um eine Drehachse drehbar. Alternativ kann der Innenring 4 drehfest mit dem Rotor 33 und der Außenring 5 drehfest mit der Gondel 32 verbunden sein. Bei einer derartigen, alternativen Ausgestaltung ist der Innenring 4 relativ zu dem Außenring 5 um eine Drehachse drehbar.

Das Rotorlager der Windkraftanlage weist ferner mindestens ein zwischen dem Innenring 4 und dem Außenring 5 angeordnetes Dichtelement 6 zur Abdichtung des Innenraums 7 des Wälzlagers 1 auf. Der Innenraum 7 ist mit einem Schmierstoff füllbar. Zur Förderung des Schmierstoffs weist das Wälzlager 1 ein Förderelement 9 auf, welches entweder an dem einen von Innenring 4 und Außenring 5 derart um die Drehachse des Wälzlagers 1 drehbar angeordnet ist, dass zwischen dem Förderelement 9 und dem anderen von Innenring 4 und Außenring 5 ein Spiel besteht.

### Bezugszeichenliste

- 1: Wälzlager
- 2: Laufbahn
- 3: Wälzkörper
- 4: Innenring
- 5: Außenring
- 6: Dichtelement
- 7: Innenraum
- 8: Fördereinrichtung
- 9: Förderelement
- 10: Grundkörper
- 11: Förderrad
- 12: Ausnehmung
- 13: Spalt
- 14: Abstreifelement
- 15: Grundkörper
- 16: Ausnehmung
- 17: Spalt
- 18: Verdrehsicherungselement
- 19: Axialfixierungselement
- 20: Nut
- 21: Dichtelement
- 30: Windkraftanlage
- 31: Turm
- 32: Gondel
- 33: Rotor
- 34: Rotorblatt

- 100: axiale Richtung
- 101: Radialrichtung

## Patentansprüche

1. Wälzlager mit einem Innenring (4) und einem Außenring (5), wobei entweder der Außenring (5) relativ zum Innenring (4) um eine Drehachse drehbar ist oder der Innenring (4) relativ zum Außenring (5) um eine Drehachse drehbar ist, sowie mit mindestens einem zwischen dem Innenring (4) und dem Außenring (5) angeordneten Dichtelement (6) zur Abdichtung eines mit einem Schmierstoff füllbaren Innenraums (7) des Wälzlagers (1), wobei das Wälzlager (1) eine in dem Innenraum (7) angeordnete Fördereinrichtung (8) zur Förderung des Schmierstoffs aufweist, wobei die Fördereinrichtung (8) ein Förderelement (9) zur Förderung des Schmierstoffs aufweist, welches an dem einen von Innenring (4) und Außenring (5) derart um die Drehachse des Wälzlagers (1) drehbar angeordnet ist, dass zwischen dem Förderelement (9) und dem anderen von Innenring (4) und Außenring (5) ein Spiel besteht, **dadurch gekennzeichnet, dass** das Wälzlager (1) ein Abstreifelement (14) zum Abstreifen von Schmierstoff von dem Förderelement (9) aufweist.

2. Wälzlager nach Anspruch 1, wobei das Förderelement (9) gegenüber dem Abstreifelement (14) bewegbar ist.

3. Wälzlager nach einem der vorhergehenden Ansprüche, wobei das Förderelement (9) und/oder das Abstreifelement (14) lamellenförmig ausgebildet ist.

4. Wälzlager nach einem der vorhergehenden Ansprüche, wobei eine Haupterstreckungsebene des Förderelements (9) und/oder des Abstreifelements (14) einen spitzen Winkel mit einer die Drehachse einschließenden Axialebene des Wälzlagers (1) einschließt.

5. Wälzlager nach einem der Ansprüche 1 bis 4, wobei das Förderelement (9) und das Abstreifelement (14) bezüglich einer die Drehachse einschließenden Axialebene des Wälzlagers (1) eine gegenläufige Neigung aufweisen.

6. Wälzlager nach einem der Ansprüche 1 bis 5, wobei eine Haupterstreckungsebene des Förderelements (9) und/oder des Abstreifelements (14) parallel zu einer Radialrichtung (101) des Wälzlagers (1) angeordnet ist.

7. Wälzlager nach einem der vorhergehenden Ansprüche, wobei das Abstreifelement (14) an dem anderen von Innenring (4) und Außenring (5) angeordnet ist und zwischen dem Abstreifelement (14) und dem einen von Innenring (4) und Außenring (5) ein Spiel vorgesehen ist.

8. Wälzlager nach einem der vorhergehenden Ansprüche, wobei das Wälzlager (1) mehrere Förderelemente (9) und/oder mehrere Abstreifelemente (14) aufweist.

9. Wälzlager nach einem der vorhergehenden Ansprüche, wobei das Wälzlager (1) mehrere Förderelemente (9) aufweist, die an einem gemeinsamen, insbesondere ringförmigen, ersten Grundkörper (10) angeordnet sind.

10. Wälzlager nach einem der Ansprüche 1 bis 9, wobei das Wälzlager (1) mehrere Abstreifelemente (14) aufweist, die an einem gemeinsamen, insbesondere ringförmigen, zweiten Grundkörper (15) angeordnet sind.

11. Wälzlager nach Anspruch 10, wobei der zweite Grundkörper (15) Ausnehmungen (16) aufweist, durch welche Schmierstoff von den Abstreifelementen (14) durch den Grundkörper (15) leitbar ist, insbesondere in Richtung von Wälzkörpern (3) des Wälzlagers (1).

12. Wälzlager nach einem der vorhergehenden Ansprüche, wobei das Wälzlager (1) zwei zwischen dem Innenring (4) und dem Außenring (5) angeordnete Dichtelemente (6, 21) zur Abdichtung des Innenraums (7) aufweist.

13. Windkraftanlage mit einer Gondel (32), einem Rotor (33) und einem Wälzlager (1), über welches der Rotor (33) drehbar mit der Gondel (32) verbunden ist, wobei das Wälzlager (1) entweder
- einen drehfest mit der Gondel (32) verbundenen Innenring (4) und einen relativ zum Innenring (4) um eine Drehachse drehbaren, drehfest mit dem Rotor (33) verbundenen Außenring (5) oder
- einen drehfest mit der Gondel (32) verbundenen Außenring (5) und einen relativ zum Außenring (5) um eine Drehachse drehbaren, drehfest mit dem Rotor (33) verbundenen Innenring (4) aufweist,
sowie mit mindestens einem zwischen dem Innenring (4) und dem Außenring (5) angeordneten Dichtelement (6) zur Abdichtung eines mit einem Schmierstoff füllbaren Innenraums (7) des Wälzlagers (1),
**dadurch gekennzeichnet, dass**
das Wälzlager (1) eine in dem Innenraum (7) angeordnete Fördereinrichtung (8) zur Förderung des Schmierstoffs aufweist, wobei die Fördereinrichtung (8) ein Förderelement (9) zur Förderung des Schmierstoffs aufweist, welches an dem einen von Innenring (4) und Außenring (5) derart um die Drehachse des Wälzlagers (1) drehbar angeordnet ist, dass zwischen dem
Förderelement (9) und dem anderen von Innenring (4) und Außenring (5) ein Spiel besteht, wobei das Wälzlager (1) ein Abstreifelement (14) zum Abstreifen von Schmierstoff von dem Förderelement (9) aufweist.

14. Verfahren zum Betrieb eines Wälzlagers (1) mit einem Innenring (4) und einem Außenring (5), wobei entweder der Außenring (5) relativ zum Innenring (4) um eine Drehachse drehbar ist oder der Innenring (4) relativ zum Außenring (5) um eine Drehachse drehbar ist, sowie mit mindestens einem zwischen dem Innenring (4) und dem Außenring (5) angeordneten Dichtelement (6) zur Abdichtung eines mit einem Schmierstoff gefüllten Innenraums (7) des Wälzlagers (1), **dadurch gekennzeichnet, dass**
eine in dem Innenraum (7) angeordnete Fördereinrichtung (8) zur Förderung des Schmierstoffs vorgesehen ist, wobei die Fördereinrichtung (8) ein Förderelement (9) zur Förderung des Schmierstoffs aufweist, wobei der Schmierstoff durch das Förderelement (9) gefördert wird, welches an dem einen von Innenring (4) und Außenring (5) derart um die Drehachse des Wälzlagers (1) drehbar angeordnet ist, dass zwischen dem Förderelement (9) und dem anderen von Innenring (4) und Außenring (5) ein Spiel besteht, wobei das Wälzlager (1) ein Abstreifelement (14) zum Abstreifen von Schmierstoff von dem Förderelement (9) aufweist, wobei von dem Förderelement (9) geförderter Schmierstoff durch das Abstreifelement (14) von dem Förderelement (9) abgestriffen wird.

## Claims

1. Rolling bearing with an inner ring (4) and an outer ring (5), wherein either the outer ring (5) is rotatable relative to the inner ring (4) about an axis of rotation or the inner ring (4) is rotatable relative to the outer ring (5) about an axis of rotation, and with at least one sealing element (6), arranged between the inner ring (4) and the outer ring (5), for sealing an interior space (7) of the rolling bearing (1), which interior space can be filled with a lubricant, wherein the rolling bearing (1) comprises a conveying device (8), arranged in the interior space (7), for conveying the lubricant, wherein the conveying device (8) comprises a conveying element (9) for conveying the lubricant, which conveying element is arranged on the one of the inner ring (4) and outer ring (5) so as to be rotatable about the axis of rotation of the rolling bearing (1) in such a way that there is play between the conveying element (9) and the other of the inner ring (4) and outer ring (5), **characterized in that** the rolling bearing (1) comprises a scraper element (14) for scraping lubricant from the conveying element (9).

2. Rolling bearing according to Claim 1, wherein the conveying element (9) is movable relative to the scraper element (14).

3. Rolling bearing according to either one of the preceding claims, wherein the conveying element (9) and/or the scraper element (14) has a lamellar form.

4. Rolling bearing according to one of the preceding claims, wherein a main plane of extent of the conveying element (9) and/or of the scraper element (14) forms an acute angle with an axial plane of the rolling bearing (1), which axial plane includes the axis of rotation.

5. Rolling bearing according to one of Claims 1 to 4, wherein the conveying element (9) and the scraper element (14) have an oppositely directed inclination with respect to an axial plane of the rolling bearing (1), which axial plane includes the axis of rotation.

6. Rolling bearing according to one of Claims 1 to 5, wherein a main plane of extent of the conveying element (9) and/or of the scraper element (14) is arranged parallel to a radial direction (101) of the rolling bearing (1).

7. Rolling bearing according to one of the preceding claims, wherein the scraper element (14) is arranged on the other of the inner ring (4) and outer ring (5), and play is provided between the scraper element (14) and the one of the inner ring (4) and outer ring (5).

8. Rolling bearing according to one of the preceding claims, wherein the rolling bearing (1) comprises multiple conveying elements (9) and/or multiple scraper elements (14).

9. Rolling bearing according to one of the preceding claims, wherein the rolling bearing (1) comprises multiple conveying elements (9), which are arranged on a common, in particular annular, first main body (10).

10. Rolling bearing according to one of Claims 1 to 9, wherein the rolling bearing (1) comprises multiple scraper elements (14), which are arranged on a common, in particular annular, second main body (15).

11. Rolling bearing according to Claim 10, wherein the second main body (15) has apertures (16), by way of which lubricant can be conducted through the main body (15) by the scraper elements (14), in particular in the direction of rolling bodies (3) of the rolling bearing (1).

12. Rolling bearing according to one of the preceding claims, wherein the rolling bearing (1) has two sealing elements (6, 21), arranged between the inner ring (4) and the outer ring (5), for sealing the interior space (7).

13. Wind turbine with a nacelle (32), a rotor (33) and a rolling bearing (1), via which the rotor (33) is rotatably connected to the nacelle (32), wherein the rolling bearing (1) comprises either
- an inner ring (4)non-rotatably connected to the nacelle (32), and an outer ring (5) which is rotatable relative to the inner ring (4) about an axis of rotation and is non-rotatably connected to the rotor (33), or
- an outer ring (5) non-rotatably connected to the nacelle (32), and an inner ring (4) which is rotatable relative to the outer ring (5) about an axis of rotation and is non-rotatably connected to the rotor (33),
and with at least one sealing element (6), arranged between the inner ring (4) and the outer ring (5), for sealing an interior space (7) of the rolling bearing (1), which interior space can be filled with a lubricant,
**characterized in that**
the rolling bearing (1) comprises a conveying device (8), arranged in the interior space (7), for conveying the lubricant, wherein the conveying device (8) comprises a conveying element (9) for conveying the lubricant, which conveying element is arranged on the one of the inner ring (4) and outer ring (5) so as to be rotatable about the axis of rotation of the rolling bearing (1) in such a way that there is play between the conveying element (9) and the other of the inner ring (4) and outer ring (5), wherein the rolling bearing (1) comprises a scraper element (14) for scraping lubricant from the conveying element (9).

14. Method for operating a rolling bearing (1) with an inner ring (4) and an outer ring (5), wherein either the outer ring (5) is rotatable relative to the inner ring (4) about an axis of rotation or the inner ring (4) is rotatable relative to the outer ring (5) about an axis of rotation, and with at least one sealing element (6), arranged between the inner ring (4) and the outer ring (5), for sealing an interior space (7) of the rolling bearing (1), which interior space is filled with a lubricant, **characterized in that** a conveying device (8), arranged in the interior space (7), for conveying the lubricant is provided, wherein the conveying device (8) comprises a conveying element (9) for conveying the lubricant, wherein the lubricant is conveyed by the conveying element (9), which is arranged on the one of the inner ring (4) and outer ring (5) so as to be rotatable about the axis of rotation of the rolling bearing (1) in such a way that there is play between the conveying element (9) and the other of the inner ring (4) and outer ring (5), wherein the rolling bearing (1) comprises a scraper element (14) for scraping lubricant from the conveying element (9), wherein lubricant conveyed by the conveying element (9) is scraped from the conveying element (9) by the scraper element (14).

## Revendications

1. Palier à roulement comportant une bague intérieure (4) et une bague extérieure (5), dans lequel soit la bague extérieure (5) peut tourner par rapport à la bague intérieure (4) autour d'un axe de rotation soit la bague intérieure (4) peut tourner par rapport à la bague extérieure (5) autour d'un axe de rotation, et comportant au moins un élément d'étanchéité (6) disposé entre la bague intérieure (4) et la bague extérieure (5) pour réaliser l'étanchéité d'un espace intérieur (7) du palier à roulement (1) pouvant être rempli d'un lubrifiant, dans lequel le palier à roulement (1) comprend un dispositif de refoulement (8) disposé dans l'espace intérieur (7) pour le refoulement du lubrifiant, dans lequel le dispositif de refoulement (8) comprend un élément de refoulement (9) pour le refoulement du lubrifiant, lequel élément de refoulement est disposé sur l'une parmi la bague intérieure (4) et la bague extérieure (5) de manière à pouvoir tourner autour de l'axe de rotation du palier à roulement (1) de telle sorte qu'un jeu existe entre l'élément de refoulement (9) et l'autre parmi la bague intérieure (4) et la bague extérieure (5), **caractérisé en ce que** le palier à roulement (1) comprend un élément racleur (14) pour le raclage de lubrifiant de l'élément de refoulement (9).

2. Palier à roulement selon la revendication 1, dans lequel l'élément de refoulement (9) est déplaçable par rapport à l'élément racleur (14).

3. Palier à roulement selon l'une des revendications précédentes, dans lequel l'élément de refoulement (9) et/ou l'élément racleur (14) est/sont réalisé(s) sous forme de lamelle(s).

4. Palier à roulement selon l'une des revendications précédentes, dans lequel un plan d'étendue principale de l'élément de refoulement (9) et/ou de l'élément racleur (14) forme un angle aigu avec un plan axial du palier à roulement (1) contenant l'axe de rotation.

5. Palier à roulement selon l'une des revendications 1 à 4, dans lequel l'élément de refoulement (9) et l'élément racleur (14) présentent une inclinaison opposée par rapport à un plan axial du palier à roulement (1) contenant l'axe de rotation.

6. Palier à roulement selon l'une des revendications 1 à 5, dans lequel un plan d'étendue principale de l'élément de refoulement (9) et/ou de l'élément racleur (14) est disposé parallèlement à une direction radiale (101) du palier à roulement (1).

7. Palier à roulement selon l'une des revendications précédentes, dans lequel l'élément racleur (14) est disposé sur l'autre parmi la bague intérieure (4) et la bague extérieure (5) et un jeu est prévu entre l'élément racleur (14) et l'une parmi la bague intérieure (4) et la bague extérieure (5).

8. Palier à roulement selon l'une des revendications précédentes, le palier à roulement (1) comprenant plusieurs éléments de refoulement (9) et/ou plusieurs éléments racleurs (14).

9. Palier à roulement selon l'une des revendications précédentes, le palier à roulement (1) comprenant plusieurs éléments de refoulement (9) qui sont disposés sur un premier corps de base (10) commun, en particulier annulaire.

10. Palier à roulement selon l'une des revendications 1 à 9, le palier à roulement (1) comprenant plusieurs éléments racleurs (14) qui sont disposés sur un deuxième corps de base (15) commun, en particulier annulaire.

11. Palier à roulement selon les revendications 10, dans lequel le deuxième corps de base (15) comprend des évidements (16) à travers lesquels du lubrifiant peut être conduit à partir des éléments racleurs (14) à travers le corps de base (15), en particulier en direction de corps de roulement (3) du palier à roulement (1) .

12. Palier à roulement selon l'une des revendications précédentes, le palier à roulement (1) comprenant deux éléments d'étanchéité (6, 21) disposés entre la bague intérieure (4) et la bague extérieure (5) pour réaliser l'étanchéité de l'espace intérieur (7).

13. Éolienne comportant une nacelle (32), un rotor (33) et un palier à roulement (1) par le biais duquel le rotor (33) est relié à la nacelle (32) de manière à pouvoir tourner, dans laquelle le palier à roulement (1) comprend soit
- une bague intérieure (4) reliée à la nacelle (32) de manière bloquée en rotation et une bague extérieure (5) pouvant tourner par rapport à la bague intérieure (4) autour d'un axe de rotation et reliée au rotor (33) de manière bloquée en rotation soit
- une bague extérieure (5) reliée à la nacelle (32) de manière bloquée en rotation et une bague intérieure (4) pouvant tourner par rapport à la bague extérieure (5) autour d'un axe de rotation et reliée au rotor (33) de manière bloquée en rotation,
et comportant au moins un élément d'étanchéité (6) disposé entre la bague intérieure (4) et la bague extérieure (5) pour réaliser l'étanchéité d'un espace intérieur (7) du palier à roulement (1) pouvant être rempli d'un lubrifiant,
**caractérisée en ce que**
le palier à roulement (1) comprend un dispositif de refoulement (8) disposé dans l'espace intérieur (7) pour le refoulement du lubrifiant, le dispositif de refoulement (8) comprenant un élément de refoulement (9) pour le refoulement du lubrifiant, lequel élément de refoulement est disposé sur l'une parmi la bague intérieure (4) et la bague extérieure (5) de manière à pouvoir tourner autour de l'axe de rotation du palier à roulement (1) de telle sorte qu'un jeu existe entre l'élément de refoulement (9) et l'autre parmi la bague intérieure (4) et la bague extérieure (5), le palier à roulement (1) comprenant un élément racleur (14) pour le raclage de lubrifiant de l'élément de refoulement (9).

14. Procédé de fonctionnement d'un palier à roulement (1) comportant une bague intérieure (4) et une bague extérieure (5), dans lequel soit la bague extérieure (5) peut tourner par rapport à la bague intérieure (4) autour d'un axe de rotation soit la bague intérieure (4) peut tourner par rapport à la bague extérieure (5) autour d'un axe de rotation, et comportant au moins un élément d'étanchéité (6) disposé entre la bague intérieure (4) et la bague extérieure (5) pour réaliser l'étanchéité d'un espace intérieur (7) du palier à roulement (1) rempli d'un lubrifiant, **caractérisé en ce qu'**un dispositif de refoulement (8) disposé dans l'espace intérieur (7) pour le refoulement du lubrifiant est prévu, le dispositif de refoulement (8) comprenant un élément de refoulement (9) pour le refoulement du lubrifiant, le lubrifiant étant refoulé par le biais de l'élément de refoulement (9), lequel est disposé sur l'une parmi la bague intérieure (4) et la bague extérieure (5) de manière à pouvoir tourner autour de l'axe de rotation du palier à roulement (1) de telle sorte qu'un jeu existe entre l'élément de refoulement (9) et l'autre parmi la bague intérieure (4) et la bague extérieure (5), le palier à roulement (1) comprenant un élément racleur (14) pour le raclage de lubrifiant de l'élément de refoulement (9), du lubrifiant refoulé par l'élément de refoulement (9) étant raclé de l'élément de refoulement (9) par le biais de l'élément racleur (14).
